# EUROPEAN PATENT APPLICATION

(11) **EP 4 206 563 A1**
(43) Date of publication of application: **05.07.2023**
(21) Application number: 21881609.8
(22) Date of filing: 19.07.2021
(51) Int. Cl.: F25B 41/00, F16L 19/02

(54) **NOISE REDUCTION DEVICE AND REFRIGERATION DEVICE HAVING SAME**

(30) Priority: 20.10.2020 CN 202022344941 U
(71) Applicant: CHONGQING HAIER REFRIGERATION ELECTRIC APPLIANCE CO., LTD., Jiangbei District Chongqing 400026 (CN); Haier Smart Home Co., Ltd., Qingdao, Shandong 266101 (CN)
(72) Inventor: YANG, Peng, Qingdao, Shandong 266101 (CN); ZHANG, Kui, Qingdao, Shandong 266101 (CN); CHEN, Jianquan, Qingdao, Shandong 266101 (CN); LIU, Jianru, Qingdao, Shandong 266101 (CN)
(74) Representative: Gille Hrabal Partnerschaftsgesellschaft mbB Patentanwälte
(86) International application number: PCT/CN2021/107023
(87) International publication number: WO 2022/083189

(57) **Abstract**

The present disclosure provides a noise reduction device. The noise reduction device includes an outer connecting tube, and the outer connecting tube includes a first end connected to a capillary tube and a second end connected to an evaporator, wherein a plurality of porous wire meshes arranged at an interval is disposed in the outer connecting tube, and side edges of the porous wire meshes abut against an inner wall surface of the outer connecting tube; and pore diameters of the plurality of porous wire meshes are gradually reduced from the first end to the second end. By providing the plurality of porous wire meshes having gradually changing pore diameters in the outer connecting tube to form the noise reduction device connected to the capillary tube and the evaporator, large bubbles formed at an ejection port of the capillary tube can be gradually dispersed and reconstituted to form small bubbles when passing through the noise reduction device, such that noise generated when the bubbles are broken can be reduced, thereby playing a role in noise reduction.

## Description

### TECHNICAL FIELD

The disclosure relates to the field of refrigeration devices, in particular to a noise reduction device and a refrigeration device having the same.

### BACKGROUND

In a refrigeration device such as a refrigerator and a freezer, high-pressure refrigerant liquid from a condenser becomes low-pressure refrigerant liquid after throttling with a capillary tube. Then, the low-pressure refrigerant liquid flows first into a high-temperature evaporator of a refrigerating chamber; after some of the low-pressure refrigerant liquid is evaporated and gasified, the remaining refrigerant liquid flows into a low-temperature evaporator of a freezing chamber and is fully evaporated to become gas during low-temperature evaporation. Afterwards, the gas is sucked into a compressor for compression, and then condensed into liquid by the condenser, such that a cooling effect can be achieved with the above continuous cycle.

However, when the refrigerant liquid flows through the capillary tube, the pressure at an ejection port of the capillary tube decreases instantly due to the special structure of the capillary tube, and a large number of bubbles are generated by a phase change of the refrigerant liquid there. The resulting bubbles may increase in size due to the decrease in pressure and eventually rupture, thereby producing an eruption noise when the bubbles rupture. The larger the volumes of the bubbles are, the greater the produced energy at the time of rupture is, and the greater the generated eruption noise is.

### SUMMARY

An object of the present disclosure is to provide a noise reduction device and a refrigeration device having the same.

The present disclosure provides a noise reduction device. The noise reduction device includes an outer connecting tube, wherein the outer connecting tube includes a first end connected to a capillary tube and a second end connected to an evaporator, wherein a plurality of porous wire meshes arranged at an interval is disposed in the outer connecting tube , and side edges of the porous wire meshes abut against an inner wall surface of the outer connecting tube; and
pore diameters of the plurality of porous wire meshes are gradually reduced from the first end to the second end.

As a further improvement of the present disclosure, the porous wire meshes include a first porous wire mesh adjacent to the first end, a second porous wire mesh disposed in a middle of the outer connecting tube and a third porous wire mesh adjacent to the second end; and pore diameters of the first porous wire mesh, the second porous wire mesh and the third porous wire mesh are sequentially reduced.

As a further improvement of the present disclosure, the outer connecting tube further sleeves a plurality of inner connecting tubes, and two adjacent inner connecting tubes abut against two opposite end surfaces of each of the porous wire meshes, respectively.

As a further improvement of the present disclosure, the outer connecting tube and the inner connecting tube are flexible tubes, and an outer diameter of the inner connecting tube is equal to an inner diameter of the outer connecting tube.

As a further improvement of the present disclosure, each of the first end and the second end further sleeves a connector, and the connector includes a tubular fixing portion disposed inside the inner connecting tube and a flared connecting portion protruding from the inner connecting tube.

As a further improvement of the present disclosure, the outer connecting tube is further sleeved with a locking device at an outer circumference corresponding to the fixing portion.

As a further improvement of the present disclosure, each of the first end and the second end is further sleeved with a hollow bolt, and each of the capillary tube and the evaporator is provided with a nut sleeve matched with the hollow bolt, the hollow bolt abutting against the locking device and pressing the locking device inwards.

As a further improvement of the present disclosure, an inner wall surface of the hollow bolt is cylinder-shaped; the locking device is a frustum cone-shaped and low-stiffness metal structural member of which side surface facing the hollow bolt, and includes a first bottom surface and a second bottom surface opposite to each other, wherein the first bottom surface is close to the hollow bolt and has a diameter smaller than an inner diameter of the hollow bolt, and a diameter of the second bottom surface is larger than the inner diameter of the hollow bolt.

As a further improvement of the present disclosure, the locking device is a hollow cylinder-shaped metal structural member and provided with a plurality of notches at an end facing the hollow bolt; an inner wall surface of the hollow bolt is frustum cone-shaped, and a side surface of the hollow bolt faces the locking device; and an inner diameter of an end of the hollow bolt close to the locking device is larger than an outer diameter of the locking device, and a diameter of an opposite end of the hollow bolt is smaller than the outer diameter of the locking device.

The present disclosure further provides a refrigeration device, which includes a capillary tube and an evaporator, wherein the refrigeration device further includes the noise reduction device as claimed above, and the noise reduction device is connected to the capillary tube and the evaporator.

The present disclosure has the following beneficial effects. By providing the plurality of porous wire meshes having gradually changing pore diameters in the outer connecting tube to form the noise reduction device connected to the capillary tube and the evaporator according to the present disclosure, large bubbles formed at an ejection port of the capillary tube can be gradually dispersed and reconstituted to form small bubbles when passing through the noise reduction device, such that noise generated when the bubbles are broken can be reduced, thereby playing a role in noise reduction.

### BRIEF DESCRIPTION OF THE DRAWINGS

FIG. 1 is a schematic diagram of a noise reduction device according to an embodiment of the present disclosure;
FIG. 2 is a schematic diagram of a trajectory of foams in a noise reduction device according to an embodiment of the present disclosure;
FIG. 3 is a schematic diagram of a noise reduction device with different numbers of porous wire meshes according to an embodiment of the present disclosure;
FIG. 4 is a schematic diagram of a noise reduction device with a limiting slot according to an embodiment of the present disclosure;
FIGs. 5 and 6 are schematic diagrams of a noise reduction device with a sound-absorbing layer according to an embodiment of the present disclosure;
FIG. 7 is a schematic diagram of a connecting device of a noise reduction device according to an embodiment of the present disclosure; and
FIG. 8 is a schematic diagram of a connecting device of a noise reduction device according to another embodiment of the present disclosure.

### DETAILED DESCRIPTION

In order to make objectives, technical solutions, and advantages of the present application clearer, the technical solutions of the present application will be clearly and completely described below in conjunction with the specific embodiments of the present application and the corresponding accompanying drawings. Obviously, the described embodiments are only a part of the embodiments of the present application, rather than all the embodiments. Based on the embodiments in present application, all other embodiments obtained by those of ordinary skill in the art without creative work shall fall within the protection scope of the present application.

The following describes the embodiments of the present disclosure in detail. Examples of the embodiments are shown in the accompanying drawings, in which the same or similar reference numerals indicate the same or similar elements or elements with the same or similar functions through the whole text. The embodiments described below with reference to the accompanying drawings are exemplary, and are merely intended to explain the present disclosure and shall not be understood as a limitation to the present disclosure.

For the convenience of description, the terms such as "upper", "lower", "rear" and "front" are used here, which denote spatial relative positions, describe the relationship of one unit or feature relative to another unit or feature in the accompanying drawings for description. The terms of the spatial relative positions may be intended to include different orientations of the equipment in use or operation other than the orientations shown in the accompanying drawings. For example, if a device in the accompanying drawings is turned upside down, the unit described as being located on "below" or "above" other units or features will be located "above" or "below" the other units or features. Therefore, the exemplary term "below" can encompass both spatial orientations of below and above.

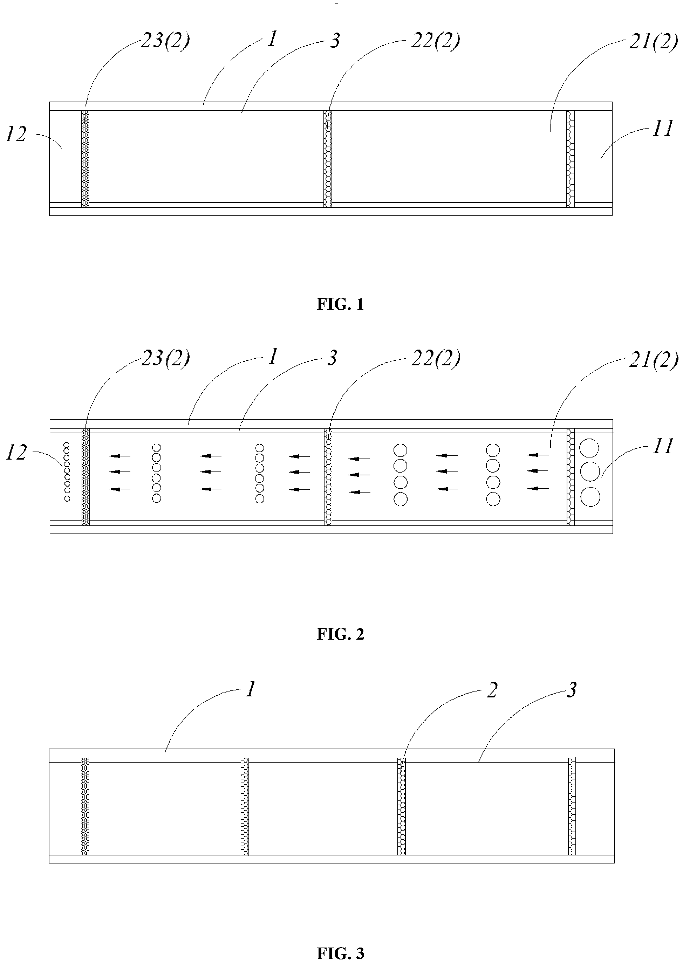

As shown in FIG. 1, the present disclosure provides a noise reduction device. The noise reduction device includes an outer connecting tube 1, and the outer connecting tube includes a first end 11 connected to a capillary tube and a second end 12 connected to an evaporator. A plurality of porous wire meshes 2 arranged at intervals is deposed in the outer connecting tube, and side edges of the porous wire meshes 2 abut against an inner wall surface of the outer connecting tube 1.

Pore diameters of the plurality of porous wire meshes 2 are reduced sequentially from the first end 11 to the second end 12.

An outer contour of the porous wire mesh 2 is circular, and an outer diameter thereof is equal to an inner diameter of the outer connecting tube 1. That is, the plane in which the porous wire meshes 2 is disposed is perpendicular to an axis of the outer connecting tube 1.

Specifically, in this embodiment, there are three porous wire meshes 2, which are a first porous wire mesh 21 adjacent to the first end 11, a second porous wire mesh 22 disposed in the middle of the outer connecting tube 1 and a third porous wire mesh 23 adjacent to the second end 12. The pore diameters of the first porous wire mesh 21, the second porous wire mesh 22 and the third porous wire mesh 23 are sequentially reduced.

As shown in FIG. 2, after a refrigerant forms bubbles at an ejection port of the capillary tube, the bubbles may be formed as bubbles large in volume due to the reduction in pressure. After passing through holes of the porous wire meshes 2, the large bubbles are dispersed and reconstituted to form small bubbles, such that the volume of the small bubbles can be gradually reduced after passing through the porous wire meshes 2 having gradually reduced pore diameters. Compared with large bubbles, small bubbles release less energy when broken, such that the vibration noise generated by the small bubbles when broken is much smaller than that of the large bubbles, thereby having an obvious noise reduction effect. In addition, the plurality of porous wire meshes 2 enables the volume of the bubbles to be gradually changed in a gentle manner, which reduces the occurrence of situations in which the bubbles are suddenly broken while being in contact with the porous wire meshes 2 and being in movement. Thus, the large bubble can be transformed into bubbles small in volume as much as possible, thereby further improving the noise reduction effect.

Of course, the number of the porous wire meshes 2 is not limited thereto, and the number of the porous wire meshes 2 can be adjusted according to the volume size of the refrigeration device, the diameter of the capillary tube, the type of the refrigerant, and other factors. As shown in FIG. 3, in another embodiment of the disclosure, four porous wire meshes 2 are evenly disposed inside the outer connecting tube 1 to further enable changes in volume of the bubbles to be gentle.

The porous wire mesh 2 is made of a hydrophobic material to prevent the refrigerant from causing a destructive effect on the pore structure of the porous wire mesh 2.

Preferably, in this embodiment, the porous wire mesh 2 is a metal wire mesh, such as a stainless-steel wire mesh and a copper wire mesh. The porous wire mesh 2 made of metal has a higher structural strength, which can effectively prolong the service life of the noise reduction device.

According to some embodiments of the present disclosure, the outer connecting tube 1 further sleeves a plurality of inner connecting tubes 3, and two adjacent inner connecting tubes 3 abut against two opposite end surfaces of each of the porous wire meshes 2, respectively.

Further, an outer diameter of the inner connecting tube 3 is equal to an inner diameter of the outer connecting tube 1.

The plurality of inner connecting tubes 3 matched with the outer connecting tube 1 in size is disposed in the outer connecting tube 1, the porous wire mesh 2 can be fixed and limited in position through the inner connecting tube 3, such that the porous wire mesh 2 can be prevented from deviating from its position under the impact of a large amount of foams, thereby keeping the structure of the noise reduction device stable. Moreover, the sleeving structure for the inner connecting tube 3 and the outer connecting tube 1 is simple and easy to implement.

Further, according to some embodiments of the present disclosure, the outer connecting tube 1 and the inner connecting tube 3 are flexible tubes such as a flexible rubber tube, and can cooperate with the thin layer structure of the porous wire mesh 2 to enable the noise reduction device to be bent at will, such that the noise reduction device can be adapted to the internal structure of different refrigeration devices.

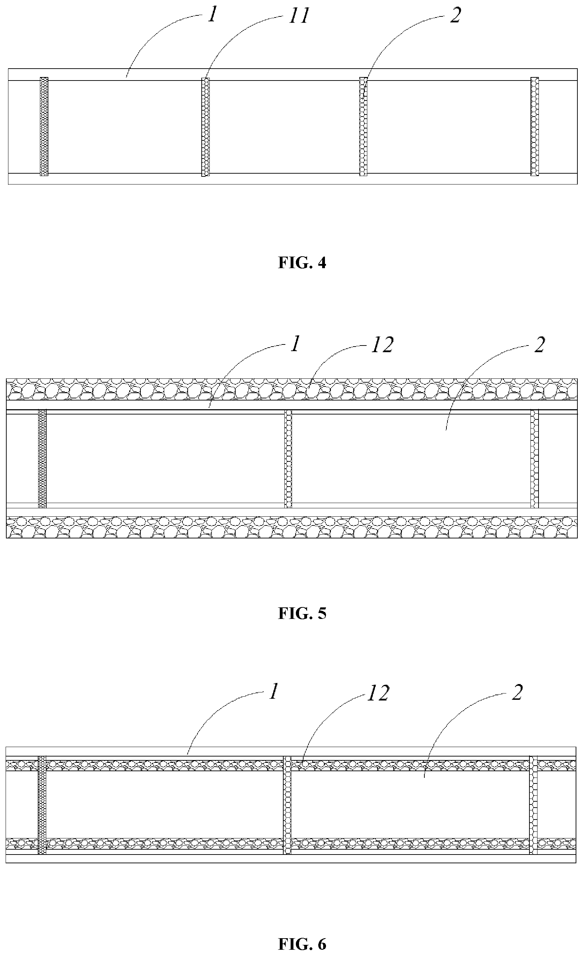

As shown in FIG. 4, according to some embodiments of the present disclosure, a plurality of limiting slots 11 may be provided on the inner wall surface of the outer connecting tube 1, and the diameter of the porous wire mesh 2 is an inner diameter of the limiting slot 11, such that the porous wire meshes 2 can be clamped in the limiting slots 11, and thus, the porous wire meshes 2 are fixed and limited in position.

As shown in FIGs. 5 and 6, according to some embodiments of the present disclosure, a sound-absorbing layer 12 may also be provided on the outer side and/or inner side of the noise reduction device, and the sound-absorbing layer 12 is filled with foams, porous material or the like, such that the noise reduction device can further play a role in noise reduction by absorbing noise.

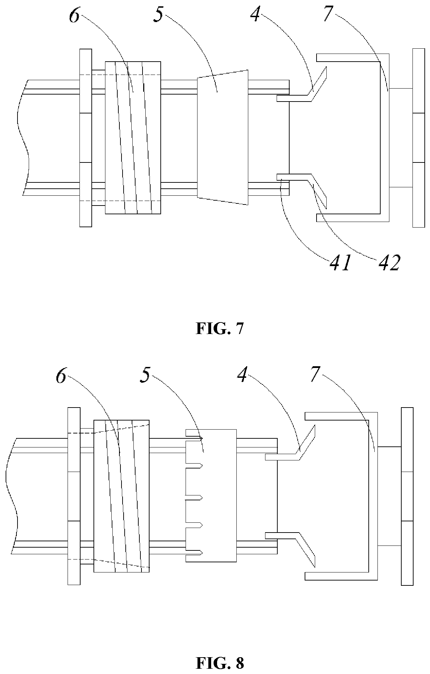

As shown in FIG. 7, a plurality of connecting devices are provided at two ends of the noise reduction device, such that the noise reduction device can be connected and fixed to the capillary tube and the evaporator.

Each of the first end 11 and the second end 12 sleeves a connector 4, and the connector 4 includes a tubular fixing portion 41 disposed inside the inner connecting tube 3 and a flared connecting portion 42 protruding from the inner connecting tube 3. The outer wall surface of the fixing portion 41 abuts against the inner wall surface of the inner connecting tube 3.

Further, the outer connecting tube 1 is further sleeved with a locking device 5 at an outer circumference corresponding to the fixing portion 41. The locking device 5 can be tightened inwards by an external force, such that the locking device 5 and the fixing portion 41 can clamp the outer connecting tube 1 and the inner connecting tube 3 to achieve a tight connection between the noise reduction device and the connector 4.

Furthermore, each of the first end 11 and the second end 12 is further sleeved with a hollow bolt 6, and each of the capillary tube and the evaporator is provided with a nut sleeve 7 matched with the hollow bolt 6. The hollow bolt 6 abutting against the locking device 5 and pressing the locking device 5 inwards. An outer diameter of the connecting portion 42 is smaller than an inner diameter of the nut sleeve 7. The connecting portion 42 abuts against the inner bottom surface of the nut sleeve 7, and its flared shape enables the connecting portion 42 to act like a funnel. The nut sleeve 7 extends towards the middle of the noise reduction device to be connected to the hollow bolt 6 on the inner side of the locking device 5. When the hollow bolt 6 is screwed in along the inner threads of the nut sleeve 7 and achieves a threaded tightening with the nut sleeve 7, the hollow bolt 6 exerts a force on the locking device 5 to tighten the locking device 5 inwards.

Specifically, according to this embodiment, the inner wall surface of the hollow bolt 6 is cylinder-shaped; the locking device 5 is a frustum cone-shaped and low-stiffness metal structural member of which side surface facing the hollow bolt, and includes a first bottom surface 51 and a second bottom surface 52 opposite to each other. The first bottom surface 51 is close to the hollow bolt 6 and has a diameter smaller than an inner diameter of the hollow bolt 6, and a diameter of the second bottom surface 52 is larger than the inner diameter of the hollow bolt 6. An edge of an inner ring of the hollow bolt 6 abuts against to the side surface of the locking device 5. When the hollow bolt 6 exerts a force on the locking device 5, the locking device 5 which is of a low-stiffness metal structure such as a copper structure may be deformed and tightened inwards, thereby achieving the tight locking function in conjunction with the connector 4.

As shown in FIG. 8, according to another embodiment of the present disclosure, the locking device 5 is a hollow cylinder-shaped metal structural member and provided with a plurality of notches at an end facing the hollow bolt 6. An inner wall surface of the hollow bolt 6 is frustum cone-shaped, and a side surface of the hollow bolt 6 faces the locking device 5. An inner diameter of the end of the hollow bolt 6 close to the locking device 5 is larger than an outer diameter of the locking device 5, and a diameter of an opposite end of the hollow bolt 6 is smaller than the outer diameter of the locking device 5. The edge of the locking device 5 abuts against the inner wall surface of the hollow bolt 6. When the hollow bolt 6 exerts a force on the locking device 5, the portion of the notches of the locking device 5 contract, and the locking device 5 is pressed inwards and thereby achieves the tight locking function in conjunction with the connector 4.

The present disclosure further provides a refrigeration device, which includes a capillary tube and an evaporator. The refrigeration device further includes the noise reduction device as described above, and the noise reduction device is connected to the capillary tube and the evaporator.

In summary, by providing the plurality of porous wire meshes having gradually changing pore diameters in the outer connecting tube to form the noise reduction device connected to the capillary tube and the evaporator according to the present disclosure, large bubbles formed at an ejection port of the capillary tube can be gradually dispersed and reconstituted to form small bubbles when passing through the noise reduction device, such that the noise generated when the bubbles are broken can be reduced, thereby playing a role in noise reduction.

It should be understood that although the present disclosure is described in terms of embodiments in this Description, not every embodiment includes only one independent technical solution. The statement mode of the Description is merely for the sake of clarity, and those skilled in the art should regard the Description as a whole. The technical solutions in respective embodiments may also be combined properly to form other embodiments that can be understood by those skilled in the art.

The series of detailed illustration listed above are merely specific illustrations of feasible embodiments of the present disclosure, and are not intended to limit the protection scope of the present disclosure. Any equivalent embodiments or modifications made without departing from the technical spirit of the present disclosure shall fall within the protection scope of the present disclosure.

## Claims

1. A noise reduction device, comprising: an outer connecting tube, wherein
the outer connecting tube comprises a first end connected to a capillary tube and a second end connected to an evaporator, wherein a plurality of porous wire meshes arranged at an interval is disposed in the outer connecting tube, and side edges of the porous wire meshes abut against an inner wall surface of the outer connecting tube; and
pore diameters of the plurality of porous wire meshes are gradually reduced from the first end to the second end.

2. The noise reduction device according to claim 1, wherein the porous wire meshes comprise a first porous wire mesh adjacent to the first end, a second porous wire mesh disposed in a middle of the outer connecting tube and a third porous wire mesh adjacent to the second end; and pore diameters of the first porous wire mesh, the second porous wire mesh and the third porous wire mesh are sequentially reduced.

3. The noise reduction device according to claim 1, wherein the outer connecting tube further sleeves a plurality of inner connecting tubes, and two adjacent inner connecting tubes abut against two opposite end surfaces of one of the porous wire meshes, respectively.

4. The noise reduction device according to claim 3, wherein the outer connecting tube and the inner connecting tube are flexible tubes, and an outer diameter of the inner connecting tube is equal to an inner diameter of the outer connecting tube.

5. The noise reduction device according to claim 3, wherein each of the first end and the second end further sleeves a connector, and the connector comprises a tubular fixing portion disposed inside the inner connecting tube and a flared connecting portion protruding from the inner connecting tube.

6. The noise reduction device according to claim 5, wherein the outer connecting tube is further sleeved with a locking device at an outer circumference corresponding to the fixing portion.

7. The noise reduction device according to claim 6, wherein each of the first end and the second end is further sleeved with a hollow bolt, and each of the capillary tube and the evaporator is provided with a nut sleeve matched with the hollow bolt, the hollow bolt abutting against the locking device to press the locking device inwards.

8. The noise reduction device according to claim 7, wherein an inner wall surface of the hollow bolt is cylinder-shaped; the locking device is a frustum cone-shaped and low-stiffness metal structural member of which side surface faces the hollow bolt, and comprises a first bottom surface and a second bottom surface opposite to each other, wherein the first bottom surface is close to the hollow bolt and has a diameter smaller than an inner diameter of the hollow bolt, and a diameter of the second bottom surface is larger than the inner diameter of the hollow bolt.

9. The noise reduction device according to claim 7, wherein the locking device is a hollow cylinder-shaped metal structural member and provided with a plurality of notches at an end facing the hollow bolt; an inner wall surface of the hollow bolt is frustum cone-shaped, and a side surface of the hollow bolt faces the locking device; and an inner diameter of an end of the hollow bolt close to the locking device is larger than an outer diameter of the locking device, and a diameter of an opposite end of the hollow bolt is smaller than the outer diameter of the locking device.

10. A refrigeration device, comprising a capillary tube and an evaporator, wherein the refrigeration device further comprises the noise reduction device according to any one of claims 1 to 9, and the noise reduction device is connected to the capillary tube and the evaporator.
